# EUROPÄISCHE PATENTSCHRIFT

(11) **EP 2 463 407 B1**
(45) Veröffentlichungstag und Bekanntmachung des Hinweises auf die Patenterteilung: **10.10.2018**
(21) Anmeldenummer: 10015427.7
(22) Anmeldetag: 08.12.2010
(51) Int. Cl.: C25B 1/04, C25B 9/08, C25B 11/03

(54) **Elektrolyseverfahren und Elektrolysezellen**
Electrolysis method and electrolysis cells
Procédé d'électrolyse et cellules d'électrolyse

(43) Veröffentlichungstag der Anmeldung: 13.06.2012
(73) Patentinhaber: Airbus Defence and Space GmbH, 82024 Taufkirchen (DE)
(72) Erfinder: Raatschen, Willigert, 88090 Immenstaad (DE); Lucas, Joachim, 88634 Großschönach (DE); Jehle, Walter, 88263 Horgenzell (DE); Funke, Helmut, 88682 Salem (DE)
(74) Vertreter: Daub, Thomas

(56) Entgegenhaltungen:
- EP-A2- 0 360 536
- US-A- 4 210 511
- US-A- 4 330 378
- US-A- 4 720 331
- US-A- 4 898 699
- US-A- 4 921 587
- US-A- 5 650 058
- US-A- 5 916 505
- US-A1- 2007 221 496
- US-A1- 2009 008 261

## Beschreibung

Die Erfindung betrifft ein Elektrolyseverfahren gemäß den Merkmalen des Oberbegriffs des Patentanspruchs 1 sowie eine Elektrolysezelle gemäß den Merkmalen des Oberbegriffs des Patentanspruchs 6.

Eine bekannte Vorrichtung zur Elektrolyse von Wasser mit fixiertem, alkalischem Elektrolyten ist z.B. aus R. J. Davenport et al., Space water electrolysis: space station through advanced missions, Journal of Power Sources, 36 1991, 235-250 bekannt. Der Kern dieser Vorrichtung ist die Elektrolysezelle. Sie umfasst folgende Komponenten:
- Elektroden, zwischen denen eine poröse Membran (Diaphragma) angeordnet ist, wobei in den Poren von Elektroden und Membran eine Elektrolytlösung durch Kapillarkräfte fixiert ist.
- eine an die Kathode angrenzende Wasserstoff-Produktgaskammer H₂
- eine an die Anode angrenzende Sauerstoff-Produktgaskammer O₂
- eine von der H₂-Produktgaskammer durch eine Membran getrennte Kammer für das Edukt, nämlich Wasser H₂O.

Für den weiteren Aufbau und Funktion einer Elektrolysezelle wird auf die Beschreibung von DE 195 35 212 C2 verwiesen.

Aus DE 195 35 212 C2 ist weiterhin ein alkalisches Elektrolyseverfahren mit immobilisierter Kalilauge bekannt, bei welchem das Wasser in ein Elektrode-Membran-Elektrode-System per Diffusion über eine dem Kathodengasraum angrenzende hydrophobe poröse Membran übertragen wird. Dieses Verfahren hat den Nachteil, dass beim Abschalten der Elektrolysezelle der Diffusionsprozess nur dadurch gestoppt werden kann, dass das gesamte Wasserreservoir im Stack mit einem Inertgas herausgespült werden muss. Da der Diffusionsprozess über die Wassertemperatur gesteuert wird, ist die Steuerung zu dem recht träge.

Der Erfindung liegt die Aufgabe zugrunde, eine einfach aufgebaute Elektrolysezelle zu schaffen, mit welcher es möglich ist, den Elektrolyseprozess schnell an- und abzuschalten, ohne dass Diffusionsvorgänge zu einer Verdünnung der immobilen Elektrolytlösung führen.

Diese Aufgabe wird gelöst mit einer Elektrolysezelle gemäß dem Anspruch 1. Vorteilhafte Ausgestaltungen sind Gegenstand von Unteransprüchen.

Die Anmeldung beschreibt ein Verfahren, welches jedoch nicht Gegenstand der Ansprüche ist. Gemäß diesem Verfahren für alkalische Elektrolysezellen mit einer Elektroden-Membran-Elektroden-Anordnung umfassend zwei poröse Elektroden mit dazwischen liegender Membran, werden ein oder mehrere Flüssigkeiten direkt in die Elektroden-Membran-Elektroden-Anordnung geführt. Erfindungsgemäß handelt es sich bei der dazwischen liegenden Membran um eine poröse Membran gefüllt mit Elektrolyt oder um eine lonenaustauschermembran.
Im Weiteren wird unter einer Elektroden-Membran-Elektroden-Anordnung oder EME-System eine Anordnung aus zwei porösen Elektroden und einem zwischen den Elektroden angeordneten porösen Diaphragma verstanden, wobei in den Poren von Elektroden und Diaphragma ein flüssiger Elektrolyt fixiert ist.

In einer besonderen Ausführungsform können die ein oder mehreren Flüssigkeiten direkt in die Membran geführt werden. Es ist in einer Alternative auch möglich, dass die ein oder mehreren Flüssigkeiten direkt in eine oder beide Elektroden geführt werden. Selbstverständlich können die ein oder mehreren Flüssigkeiten auch direkt in die Membran und wenigstens in eine Elektrode geführt werden.

Zweckmäßig werden die ein oder mehreren Flüssigkeiten durch eine in der Membran und/oder der einen oder beiden Elektrode(n) ausgeführte Kanalstruktur geführt. Dadurch wird gewährleistet, dass die ein oder mehreren Flüssigkeiten gleichmäßig in der Membran bzw. Elektrode verteilt werden.

Gemäß der Erfindung umfasst die Elektrolysezelle poröse Elektroden, zwischen denen eine poröse Membran angeordnet ist, wobei in den Poren von Elektroden und Membran ein flüssiger Elektrolyt fixiert ist, eine an die Kathode angrenzende Produktgaskammer, eine an die Anode angrenzende weitere Produktgaskammer und eine Anordnung zur Zuführung von Wasser zu den Elektroden. Erfindungsgemäß ist in der Membran eine Kanalstruktur ausgeführt, durch welche eine Verteilung der Flüssigkeit, Wasser oder Elektrolyt, vorgesehen ist.

Die Kanalstruktur kann zweckmäßig eine Struktur aus Mikro- und/oder Nanokanälen sein. Bei der Membran handelt es sich zweckmäßig um eine protonenleitende Membran oder eine Anionentauschermembran. In einer besonderen Ausführungsform kann die Membran auch mehrlagig ausgeführt sein.

Als Elektrolyt wird zweckmäßig eine konzentrierte, wässrige Lösung mit hoher elektrischer Leitfähigkeit verwendet. Bevorzugte Ausführungsbeispiele hierfür sind: Säuren, Basen und Metallsalzlösungen mit hoher elektrischer Leitfähigkeit wie zum Beispiel: Kaliumhydroxid oder andere Alkali- und Erdalkalihydroxide in Konzentrationen von etwa 5 bis 12 mol/Liter; Schwefelsäure von etwa 2 bis 5 mol/Liter; Phosphorsäure etc.

Ein Vorteil der Erfindung ist es, dass bei alkalischen Elektrolysezellen mit immobilisiertem Elektrolyten Wasser und/oder Elektrolyt auf direktem Wege dem EME-System zugeführt wird, so dass keine Inertgasspülung bei Abschaltung nötig ist und zusätzlich die Trägheit des Systems bei Laständerungen reduziert wird. Außerdem wird bei Polymerelektrolytzellen Wasser ebenfalls direkt dem EME-System zugeführt, so dass das austretende Wasserstoff- und Sauerstoffgas als Gas die Zelle verlässt und es keiner Gas-/Flüssigtrennung mehr bedarf.

Die Erfindung sowie weitere Vorteile der Erfindung werden anhand von Zeichnungen näher erläutert. Es zeigen:
- Fig. 1: für die alkalische Elektrolyse schematisch eine erfindungsgemäße Elektrolysezelle,
- Fig. 2: für die alkalische Elektrolyse schematisch eine beispielhafte Anordnung von Mikrokanälen in einem Diaphragma,
- Fig. 3: schematisch einen Polymermembran-Elektrolysezelle gemäß dem Stand der Technik,
- Fig. 4: schematisch eine erfindungsgemäße Polymermembran-Elektrolysezelle,
- Fig. 5: schematisch eine erfindungsgemäße Elektrolysezellenanordnung mit beispielhaft drei Elektrolysezellen.

### Alkalische Elektrolyse

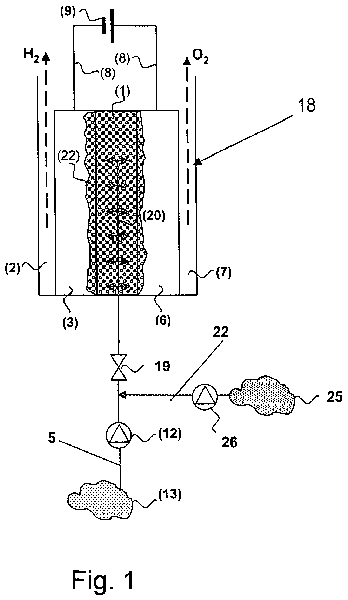

Fig. 1 zeigt schematisch eine erfindungsgemäße alkalische Elektrolysezelle, bei welchem der Elektrolyt 22, z.B. Kalilauge, durch die Porosität der Elektroden 3, 6 und der Membran 1 (Diaphragma) immobilisiert ist.

Wird nun an die Stromleitungen 8 mittels einer Stromquelle 9 eine Spannung angelegt, so werden Wassermoleküle aus dem wässrigen Elektrolyt 22 in ihre Bestandteile Wasserstoff, H₂, und Sauerstoff, O₂ aufgespalten. An der Kathode 3 entsteht H₂, welches als Gas in den H₂-Gasraum 2 strömt. An der Anode 6 entsteht gasförmiger Sauerstoff, welcher in den O₂-Gasraum 7 strömt. Im Fortgang dieses Prozesses konzentriert sich der Elektrolyt 22 immer weiter auf, wenn nicht entsprechend Wasser nachgeführt wird. In der erfindungsgemäßen Elektrolysezelle 18 ist vorgesehen, dass das zu spaltende Wasser dem immobilisierten Elektrolyten 22 wieder zugeführt wird.

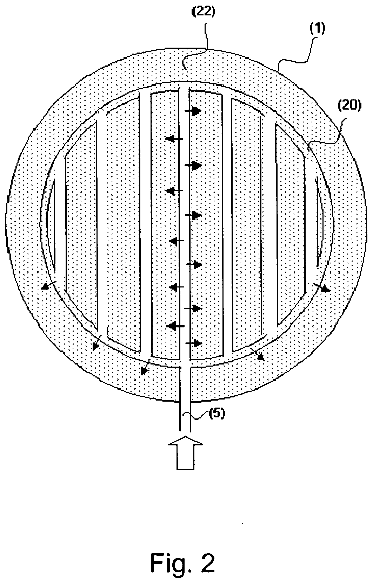

Gemäß der Erfindung erfolgt die Zuführung des zu spaltenden Wassers über eine Kanalstruktur 20, welche in die Membran 1 und bevorzugt wenigstens einer Elektrode 3,6 ausgeführt sind. Durch dieses Kanalstruktur 20 wird großflächig das zu spaltende Wasser in das EME-System 3, 1, 6 eingebracht und großflächig im EME-System 3,1,6 verteilt. Zahlreiche andere Möglichkeiten der direkten Zufuhr von Wasser in das EME-System 3,1,6 sind denkbar. Fig. 2 zeigt beispielhaft eine Membran 1 mit parallelen Kanälen 20 und umgebenden Ringkanal.
Über ein Steuerventil 19 und eine erste Pumpe 12 ist die Elektrolysezelle, nämlich die Kanalstruktur 20 der Membran 1 der Elektrolysezelle mit einem Wasserreservoir 13 verbunden. Für spezielle Anwendungen könnten auch die Kapillarkräfte in dem EME-System 3,1,6 ausreichen, um sich gegebenenfalls das zu spaltende Wasser aus einem Wasserreservoir 13 ohne Pumpe 12 herauszusaugen.

Dies ist jedoch nicht von der vorliegenden Erfindung umfasst. Bei längerem Betrieb der alkalischen Elektrolysezelle oder Fehloperationen kann flüssiger Elektrolyt aus dem EME-System 3,1,6 über die Produktgasräume ausgetragen werden, wodurch sich die Elektrolytkonzentration in der Elektrolysezelle verdünnt und diese in der Leistung nachlässt. Zweckmäßig kann über das Elektrolytreservoir 25 und die Pumpe 26 auch Elektrolyt über die Kanalstruktur einer Zelle zugeführt werden.
Über das Steuerventil 19 und eine zweite Pumpe 26 ist die Elektrolysezelle 18, nämlich die Kanalstruktur 20 der Membran 1 der Elektrolysezelle mit einem Elektrolytreservoir 25 verbunden. Damit ist es möglich, dass der Elektrolyt 22 direkt über die Kanalstruktur 20 in die Membran 1 eingebracht und auf der Membranoberfläche verteilt wird.
Das Kanalstruktur 20 ist so aufgebaut, dass sich das Wasser so gleichmäßig über der Fläche der Membran 1 des EME-Systems 3,1,6 verteilt und mit dem Elektrolyt 22 vermischt und sich vernachlässigbare Konzentrationsgradienten über dem Flächenquerschnitt bilden.
Wird nun der Elektrolyseprozess gestoppt und die Stromzufuhr zu der Elektrolysezelle unterbrochen, dann wird auch kein Wasser nachgefördert, wenn das Steuerventil 17 geschlossen oder die Pumpe 12 ausgeschaltet wird. In diesem Zustand kann eine alkalische Elektrolysezelle dann beliebig lange bleiben, ohne dass ein Spülen der Elektrolysezelle notwendig wäre.

Die direkte Zufuhr des zu spaltenden Wassers bzw. des Elektrolyten an die Membran 1 des EME-Systems 3,1,6 bietet hier folgende Vorteile:
- einfacher apparativer Aufwand der Elektrolysezelle, weil die Wasserdiffusionsschicht entfällt und nicht mit Inertgas nach Abschalten gespült werden muss,
- höhere Stromdichten,
- schnelleres Regelverhalten,
- mögliches Nachfüllen von ausgetragenem Elektrolyt.

### Polvmermembranelektrolvse

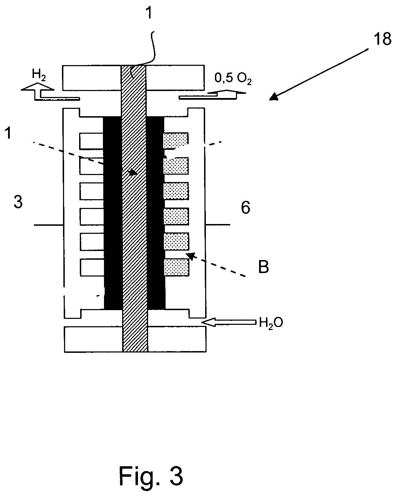

Die gleiche Anordnung mit separater Zufuhr des zu spaltenden Wassers an die Membran 1 des EME-Systems 3,1,6 lässt sich auch für Elektrolysezelle mit Polymerelektrolyten anwenden. Figur 3 zeigt den schematischen Aufbau eines Membranelektrolyt- Elektrolysezelle gemäß dem Stand der Technik. Hier im Beispiel wird als Membran 1 eine protonenleitende Membran benutzt. Als Membran 1 kann aber auch eine Anionentauschermembran verwendet werden, bei welchen Hydroxylionen die Stromleitung übernehmen.

Gemäß dem allgemein bekannten Stand der Technik wird auf der Anodenseite 6 Wasser durch eine Kanalstruktur (nicht dargestellt) der Bipolarplatte B gepumpt. Ein Teil des Wassers wird gespalten. Hierbei wird der Sauerstoff in den Wasserstrom einsprudeln und von diesem aus der Elektrolyseurzelle 18 gefördert. Auf der Kathodenseite 3 tritt der Wasserstoff in die Zwischenräume der Bipolarplatte B ein. Zur besseren Abfuhr des Wasserstoffs wird häufig auch auf der Kathodenseite 3 im Kreis zirkulierendes Wasser benutzt, um den Wasserstoff auszutragen. Das macht es notwendig, dass zur Erhaltung von gasförmigen H₂ und O₂ eine Phasentrennung notwendig wird, welche zusätzlicher Aggregate bedarf.

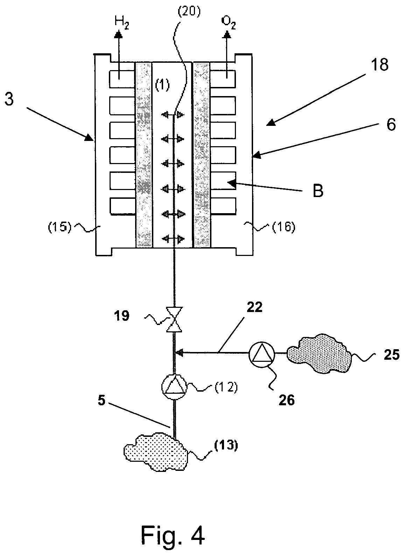

Fig. 4 zeigt eine erfindungsgemäße Elektrolysezelle Membranelektrolyt- Elektrolysezelle, bei welcher vorgesehen ist, das zu spaltende Wasser über ein Mikrokanalsystem in die Membran 1 großflächig der Anode 6 zuzuführen. Das Wasser wird über ein Mikrokanalsystem 20 in die Membran 1 eingebracht. Gasförmiges H₂ und O₂ entsteht an der Kathode 3 und an der Anode 6 und entweicht über Kanäle (nicht dargestellt) in den Bipolarplatten 15 und 16. Die direkte Wasserzufuhr bietet hier folgende Vorteile:
- Wegfall der Gas-/Flüssigseparatoren einschließlich Verrohrung und Pumpen. Insbesondere bei Druckelektrolysezellen führt dies zu einer erheblichen Gewichtsreduzierung. Außerdem entfällt eine Phasentrennung, welche insbesondere für Anwendungen unter Schwerelosigkeit erwünscht ist.
- geringerer Energieaufwand durch Wegfall der Pumpen

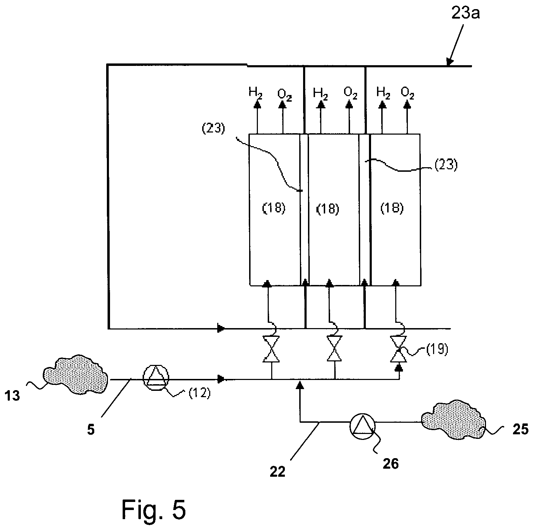

Fig. 5 zeigt gemäß der Erfindung schematisch eine beispielhafte Elektrolysezellenanordnung mit beispielhaft drei Elektrolysezellen18. Jede Elektrolysezelle 18 besteht bei immobilisierten alkalischen oder bei Polymermembranelektrolysezellen aus dem EME-System 3,1,6 und den, H₂ und O₂ Gasräumen mit der jeweiligen Rahmenstruktur zum Abführen des H₂ und O₂.

Das Wasser aus dem Wasserreservoir 13 wird nun zentral von einer Pumpe 12 auf Druck gebracht und individuell über Steuerventile 19 jeder Elektrolysezelle 18, nämlich der Mikrokanalstruktur in der Membran (nicht dargestellt) zugeführt. Es ist aber auch möglich, dass jede Elektrolysezelle 18 mit je einer Pumpe verbunden ist, welche wiederum mit dem Wasserreservoir 13 verbunden ist. In dieser Variante könnten die Steuerventile 19 für jede Elektrolysezelle 18 entfallen.

In der in Fig. 5 dargestellten Elektrolysezellenanordnung ist jede Elektrolysezelle auch mit einem Elektrolyten aus einem Elektrolytreservoir 26 versorgt. Der Elektrolyt aus dem Elektrolytreservoir 25 wird nun zentral von einer Pumpe 26 auf Druck gebracht und individuell über Steuerventile 19 jeder Elektrolysezelle 18, nämlich der Mikrokanalstruktur in der Membran (nicht dargestellt) zugeführt. Es ist aber auch möglich, dass jede Elektrolysezelle 18 mit je einer Pumpe verbunden ist, welche wiederum mit dem Elektrolytreservoir 25 verbunden ist.

Die Kühlung einer Elektrolysezelle 18 erfolgt über zwischen den einzelnen Elektrolysezellen 18 angeordneten Kühlzellen 23, welche parallel mit Kühlwasser durchströmt sind. Der vom elektrochemischen Prozess entkoppelte Kühlwasserkreis 23a dient somit ausschließlich der Kühlung. Bei alkalischen Elektrolysezellen entfällt die Diffusionsmembran, wie in DE 195 35 212 C2 beschrieben. Bei der Polymermembran-Elektrolysezelle entfallen der O₂-und/oder H₂-Wasserkreislauf und damit die Phasentrennung.

Durch Materialtoleranzen oder unterschiedliches thermisches Verhalten einzelner Zellen kann es zu Unterschieden im Betriebsverhalten und der Alterung von einzelnen Zellen kommen. Im Extremfall könnte beim Stand der Technik eine einzige Zelle ausfallen und damit den gesamten Zellstapel betriebsunfähig machen.

Über die Direktwasserzufuhr ergeben sich folgende weitere Vorteile:
a) Über eine individuelle Pumpe 12 mit individueller Ansteuerung für jede Zelle oder mittels für sämtliche Elektrolysezellen 18 zentraler Pumpe 12 und individuell ansteuerbaren Steuerungsventilen 19 für jede Elektrolysezelle 18 kann die Wasserzufuhr und eine notwendig werdende Elektrolytnachfüllung für eine Elektrolysezelle 18 getrennt von den anderen Zellen 18 erfolgen. Die Möglichkeit einer individuellen Wasserzufuhr ist die Voraussetzung dafür, jede Elektrolysezelle 18 an ihrem optimalen Betriebspunkt zu fahren.
b) Über einen Stopp der Wasserzufuhr und Überbrückung der Stromzufuhr einhergehend mit einer Schließung des H₂ und O₂-Kanals eine Elektrolysezelle 18 ließe sich auch eine Abkopplung von defekten Zellen vom Stapel aus mehreren Elektrolysezellen18 erreichen.

## Patentansprüche

1. Elektrolysezelle (18) umfassend
poröse Elektroden (3, 6), zwischen denen eine poröse Membran (1) angeordnet ist, wobei in den Poren von Elektroden (3, 6) und Membran (1) ein flüssiger Elektrolyt (22) fixiert ist,
eine an die Kathode (3) angrenzende Produktgaskammer (2, 15),
eine an die Anode (6) angrenzende weitere Produktgaskammer (7, 16) und eine Anordnung zur Zuführung einer Flüssigkeit (22, 5) zu den Elektroden (3,6), wobei in der Membran (1) eine Kanalstruktur (20) ausgeführt ist, durch welche eine Verteilung der Flüssigkeit (22, 5) vorgesehen ist,
**dadurch gekennzeichnet, dass**
die Flüssigkeit Elektrolyt (22) oder zu spaltendes Wasser (5) zur Zuführung zu dem Elektrolyt (22) ist,
wobei die Kanalstruktur (20) über eine erste Pumpe (12) mit einem Wasserreservoir (13) verbunden ist und
wobei die Kanalstruktur (20) über eine zweite Pumpe (26) mit einem Elektrolytreservoir (25) verbunden ist.

2. Elektrolysezelle nach Anspruch 1,
**dadurch gekennzeichnet, dass**
in wenigstens einer Elektrode (3, 6) eine Kanalstruktur (20) ausgeführt ist, durch welche eine Verteilung der Flüssigkeit (22, 5) vorgesehen ist.

3. Elektrolysezelle zumindest nach Anspruch 1,
**dadurch gekennzeichnet, dass**
die Membran (1) ein- oder mehrlagig ausgeführt ist.

4. Elektrolysezelle nach einem der Ansprüche 1 bis 3,
**dadurch gekennzeichnet, dass**
die Kanalstruktur (20) eine Struktur aus Mikro- und/oder Nanokanälen ist.

5. Anordnung umfassend ein oder mehrere in Reihe oder parallel geschaltete Elektrolysezellen nach einem der vorangehenden Ansprüche 1 bis 4,
**dadurch gekennzeichnet, dass**
die Kanalstruktur (20) jeder Elektrolysezelle (18) über je ein Steuerventil (19) mit der ersten Pumpe (12) verbunden ist und die erste Pumpe (12) mit dem Wasserreservoir (13) verbunden ist und
wobei jedes Steuerventil (19) über die zweite Pumpe (26) mit dem Elektrolytreservoir (25) verbunden ist.

6. Anordnung nach Anspruch 5,
**dadurch gekennzeichnet, dass**
zwischen den Elektrolysezellen (18) mit einem Kühlmedium durchströmte Kühlzellen (23) angeordnet sind.

## Claims

1. Electrolytic cell (18),
comprising porous electrodes (3, 6) between which a porous membrane (1) is arranged, wherein a liquid electrolyte (22) is fixed in the pores of the electrodes (3, 6) and of the membrane (1),
a product gas chamber (7, 16) adjacent to the cathode (3),
a further product gas chamber (7, 16) adjacent to the anode (6) and an arrangement for feeding a liquid (22, 5) to the electrodes (3, 6), wherein a structure of channels (20), through which a distribution of the liquid (22,5) is provided, is implemented in the membrane (1),
**characterised in that**
the liquid is an electrolyte (22) or water to be split (5) that is to be fed to the electrolyte (22),
wherein the structure of channels (20) is connected to a water reservoir (13) by way of a first pump (12) and
wherein the structure of channels (20) is connected to an electrolyte reservoir (25) by a second pump (26).

2. Electrolytic cell as claimed in claim 1,
**characterised in that**
in at least one electrode (3, 6) a structure of channels (20) is implemented, through which a distribution of the liquid (22,5) is provided.

3. Electrolytic cell at least as claimed in claim 1,
**characterised in that**
the membrane (1) is implemented in one or more layers.

4. Electrolytic cell as claimed in one of claims 1 to 3,
**characterised in that**
the structure of channels (20) is a structure of microchannels and/or nanochannels.

5. Arrangement comprising one or a plurality of electrolytic cells connected in series or parallel, as claimed in one of the preceding claims 1 to 4,
**characterised in that**
the channel structure (20) of each electrolytic cell (18) is connected to the first pump (12) by way of a respective control valve (19) and the first pump (12) is connected to the water reservoir (13)
and wherein each control valve (19) is connected to the electrolyte reservoir (25) by way of the second pump (26).

6. Arrangement as claimed in claim 5,
**characterised in that**
cooling cells (23), through which a cooling medium flows, are arranged between the electrolytic cells (18).

## Revendications

1. Cellule d'électrolyse (18), comprenant
des electrodes poreuses (3, 6), entre lesquelles est disposée une membrane poreuse (1), un électrolyte liquide (22) étant fixé dans les pores des électrodes (3, 6) et de la membrane (1),
une chambre de gaz produit (2, 15) adjacente à la cathode (3),
une autre chambre de gaz produit (7, 16) adjacente à l'anode (6) et
un arrangement pour une alimentation d'un liquide (22, 5) aux électrodes (3, 6), une structure à canaux (20) étant implémentée dans la membrane (1), par laquelle une distribution du liquide (22, 5) est prévue,
**caractérisée en ce que**
le liquide est un électrolyte (22) ou de l'eau à dissocier (5) prévue pour être alimentée à l'électrolyte (22),
la structure à canaux (20) étant raccordée à un réservoir d'eau (13) par une première pompe (12) et
la structure à canaux (20) étant raccordée à un réservoir d'électrolyte (25) par une deuxième pompe (26).

2. Cellule d'électrolyse selon la revendication 1,
**caractérisée en ce que**
dans au moins une électrode (3, 6) une structure à canaux (20) est implémentée, par laquelle une distribution du liquide (22, 5) est prévue.

3. Cellule d'électrolyse au moins selon la revendication 1,
**caractérisée en ce que**
la membrane (1) est réalisée à une couche ou à plusieures couches.

4. Cellule d'électrolyse selon l'une quelconque des revendications 1 à 3,
**caractérisée en ce que**
la structure à canaux (20) est une structure des canaux micro et/ou nano.

5. Arrangement, comprenant une cellule d'électrolyse ou plusieures cellules d'électrolyse connectées en série et en parallèle, selon l'une quelconque des revendications 1 à 4,
**caractérisé en ce que**
la structure à canaux (20) de chacune cellule d'électrolyse (18) est raccordée avec la première pompe (12) par le biais d'une vanne de commande (19) respective, et la première pompe (12) est raccordée avec le réservoir d'eau (13) et chacune vanne de commande (19) est raccordée avec le réservoir d'électrolyte (25) par le biais de la deuxième pompe (26).

6. Arrangement selon la revendication 5,
**caractérisé en ce qu'**
entre les cellules d'électrolyse (18) des cellules réfrigérants (23) sont disposées, un milieu réfrigérant coulant à travers lesdites cellules réfrigérants (23).
